# FASCICULE DE BREVET EUROPEEN

(11) **EP 2 320 354 B1**
(45) Date de publication et mention de la délivrance du brevet: **18.03.2015**
(21) Numéro de dépôt: 10188992.1
(22) Date de dépôt: 27.10.2010
(51) Int. Cl.: G06K 7/00, G06K 19/077

(54) **Dispositif électronique personnalisable de poche**
Personalisierbares elektronisches Taschengerät
Personalisable electronic pocket device

(30) Priorité: 29.10.2009 FR 0957603
(43) Date de publication de la demande: 11.05.2011
(73) Titulaire: Oberthur Technologies, 92300 Levallois-Perret (FR)
(72) Inventeur: Titova, Olga, 92120 Montrouge (FR); Do, Roger, 91300 Massy (FR); Meslin, Jean-Marc, 95170 Deuil La Barre (FR)
(74) Mandataire: Delumeau, François Guy

(56) Documents cités:
- WO-A2-2004/019261
- JP-A- 2004 280 639
- JP-A- 2007 066 289
- US-A1- 2006 046 544
- US-A1- 2006 231 618
- US-A1- 2008 278 902

## Description

La présente invention concerne le domaine technique de la personnalisation des dispositifs électroniques portables, ou de poche, tels que notamment les clés électroniques.

Elle s'applique plus particulièrement mais non spécifiquement aux clés mémoire USB (acronyme de l'expression anglo-saxonne « Universal Serial Bus »), notamment utilisées pour le transport et le stockage de données informatiques.

En général, une clé électronique comprend un ensemble de circuits électroniques porté généralement par un support de circuit imprimé, tel qu'un PCB, le tout étant logé à l'intérieur d'un boîtier.

La clé est munie également d'un connecteur USB adapté pour venir en prise avec un port conforme à la norme USB d'un terminal externe, tel qu'un ordinateur personnel. Ce connecteur comprend généralement une première partie dépassant du boîtier et une deuxième partie raccordée électriquement aux circuits électroniques.

Dans de nombreuses applications notamment dans le domaine des transports publics, de la sécurité, etc., il est souhaitable de personnaliser la clé électronique relativement au possesseur de la clé afin de permettre son identification et son authentification. Ainsi, il est connu d'associer un visuel de la clé avec des données personnelles mémorisées par exemple dans la clé.

On connaît déjà de l'état de la technique, notamment du document EP 1 535 240, un support de carte à microcircuit, comprenant un corps muni d'un connecteur conforme à une norme prédéfinie de clé mémoire dépassant du corps apte à être connecté à un terminal externe.

Le connecteur est, dans ce document, de type USB et est raccordé électriquement à une première interface du support apte à coopérer avec une deuxième interface portée par une face de la carte à microcircuit. Le corps comprend en outre un logement pour la carte à microcircuit agencé pour mettre en contact les deux interfaces lorsque la carte est insérée dans le logement du support.

En outre, la carte est personnalisable et permet ainsi une personnalisation électronique du dispositif par la présence du microcircuit mais également graphique par la présence d'un élément de personnalisation porté par l'une des faces de la carte. Ainsi, la carte porte sur la face opposée à celle portant la deuxième interface, des données de personnalisation telles que par exemple une photographie du possesseur de la carte ou encore un identifiant propre à ce possesseur. Ces données de personnalisation sont visibles lorsque la carte est insérée dans le logement.

Dans ce document, afin de maintenir la carte dans le logement, le support de carte est muni d'un dispositif de verrouillage. Pour extraire la carte de son logement, il est nécessaire d'utiliser un outil pointu tel qu'un crayon à insérer dans un trou prévu à cet effet à l'extrémité du logement.

Ceci présente l'inconvénient d'être peu pratique car il est nécessaire d'avoir un objet pointu sur soi pour extraire la carte. En outre, la sollicitation répétée du dispositif de verrouillage peut conduire à une fragilisation de ce dernier et à sa dégradation. La carte est alors à terme moins bien retenue dans son logement et il y a un risque de perte de cette dernière.

JP2007066289 divulgue une clé mémoire USB comprenant un connecteur USB. Ce connecteur est monté sur un corps qui est capable de glisser à l'intérieur d'un boîtier. En outre, une carte électronique peut être insérée par une ouverture dans la clé. Cette ouverture est alignée avec une fente dans le corps. L'insertion de la carte n'est possible que quand le connecteur USB fait saillie du boîtier et la fente et l'ouverture sont alignées. Quand le connecteur USB est rentré à l'intérieur du boîtier, l'ouverture est fermée par une partie du corps et la fente 34 est fermée par une partie du boîtier.

JP2004280639 divulgue une clé mémoire USB comprenant un connecteur USB. La clé comprend un capuchon de protection qui pivote ou glisse par rapport au boîtier de la clé. Dans une première position, le connecteur USB est protégé par le capuchon et il est possible d'insérer une carte dans une ouverture. Dans une deuxième position le connecteur USB n'est pas protégé et l'ouverture est obturée.

US20060231618 divulgue un boîtier circulaire comprenant un lecteur de carte à puce et un connecteur à clé électronique. Le boîtier comprend un couvercle qui protège le connecteur et obture l'accès au lecteur quand il est fermé.

US20060046544 divulgue une clé mémoire USB comprenant un connecteur USB. La face frontale de la clé comprend aussi une ouverture pour une carte..

US20080278902 divulgue aussi une clé mémoire USB. Le connecteur USB de la clé est protégé par un capuchon qui est capable de pivoter autour d'un point de fixation.

L'invention a notamment pour but de fournir un support de carte permettant un maintien efficace et robuste de la carte dans son logement tout en étant facile d'emploi et particulièrement esthétique.

A cet effet, l'invention a pour objet un support pour une carte personnalisable, telle qu'une carte à microcircuit, le support comprenant un corps muni d'un connecteur à clé électronique et d'un logement pour la carte muni d'une ouverture d'insertion de la carte dans le logement, le support comprenant en outre un capuchon de rangement du connecteur relié au corps et déplaçable par rapport au corps entre au moins une première position correspondant à une position de rangement du connecteur dans le capouchon et une deuxième position, le corps et le capuchon étant agencés entre eux pour permettre l'obturation de l'ouverture dans la première position et sa libération dans la deuxième position, et le corps étant déplaçable par rapport au capuchon dans une troisième position de dégagement du connecteur hors du capuchon pour son utilisation, le corps et le capuchon étant agencés pour obturer l'ouverture du logement dans la troisième position.

Grâce à la double fonction du capuchon, à savoir protéger le connecteur et retenir la carte dans le logement, il n'est pas nécessaire de prévoir des moyens de verrouillage complexes supplémentaires de maintien de la carte dans le logement.

En effet, le verrouillage est assuré par un simple déplacement du capuchon par rapport au corps. Il n'est ainsi pas nécessaire de prévoir un outil spécifique pour sortir la carte de son logement, cette dernière pouvant être retirée librement de son logement sans que des moyens supplémentaires bloquent sa sortie et nécessitent d'exercer un effort pour l'en extraire.

Ainsi, pour personnaliser le support, cette personnalisation pouvant consister soit en une personnalisation graphique, soit en une personnalisation électronique soit encore en une combinaison des deux types de personnalisation, il suffit de déplacer le capuchon par rapport au corps dans la deuxième position pour permettre l'insertion de la carte dans le logement. Cette carte est par ailleurs aisément retirable à tout moment.

Un support selon l'invention peut en outre comporter l'une ou plusieurs des caractéristiques suivantes :
- le corps et le capuchon sont agencés pour laisser apparent au moins dans la première position un élément de personnalisation graphique porté par une des faces de la carte ;
- le logement comprend une première interface de couplage avec une deuxième interface de la carte à microcircuit, la première interface étant raccordée électriquement au connecteur ;
- le corps incorpore une antenne de communication à champ proche ;
- pour passer d'une position à l'autre, le capuchon est configuré pour recevoir au moins partiellement le corps mobile en rotation autour d'un axe prédéfini et le capuchon comprend une ouverture agencée pour coïncider avec l'ouverture du logement dans la deuxième position ; - le capuchon a une forme de coque délimitant l'ouverture du capuchon et le corps a une forme générale de disque tronqué par un méplat portant le connecteur, le corps étant susceptible de présenter successivement par l'ouverture de la coque, le méplat et/ou une portion non tronquée de son disque lors du déplacement relatif du corps et du capuchon ; - le corps a une forme générale de disque prolongé radialement par le connecteur et le capuchon a une forme générale de volute comprenant une paroi périphérique agencée pour épouser circonférentiellement le corps et munie d'au moins une fente périphérique par laquelle le connecteur est susceptible de faire saillie lors du déplacement relatif du corps et du capuchon ; - la volute a un axe d'enroulement correspondant à l'axe prédéfini et le disque du corps est centré sur cet axe d'enroulement.

L'invention a encore pour objet un dispositif électronique personnalisable de poche comprenant un support de carte et une carte personnalisable, caractérisé en ce que le support est selon l'invention.

De préférence, la carte incorpore un microcircuit et/ou porte un élément de personnalisation graphique sur au moins l'une de ses faces.

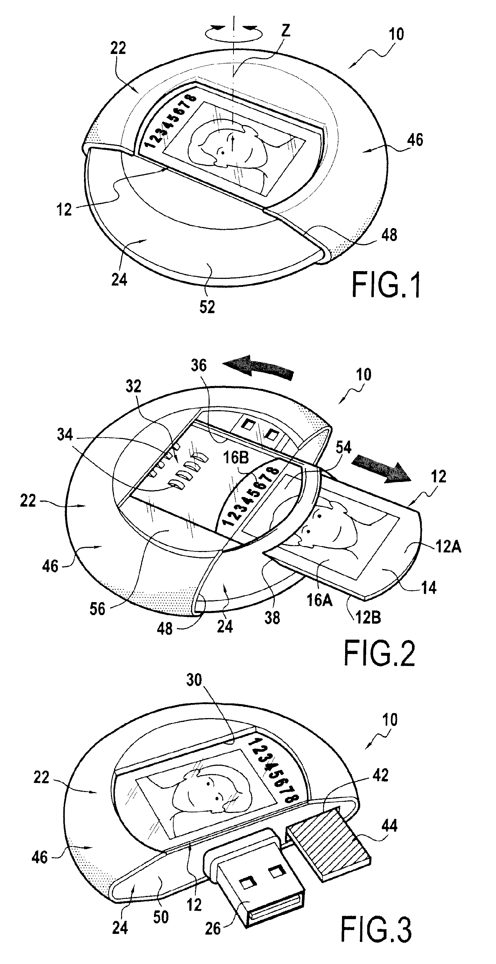

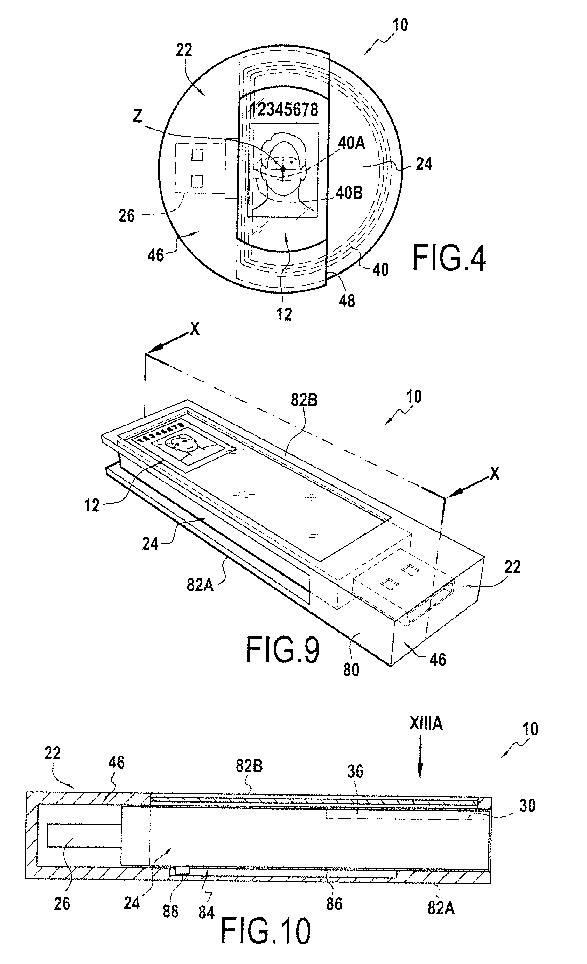

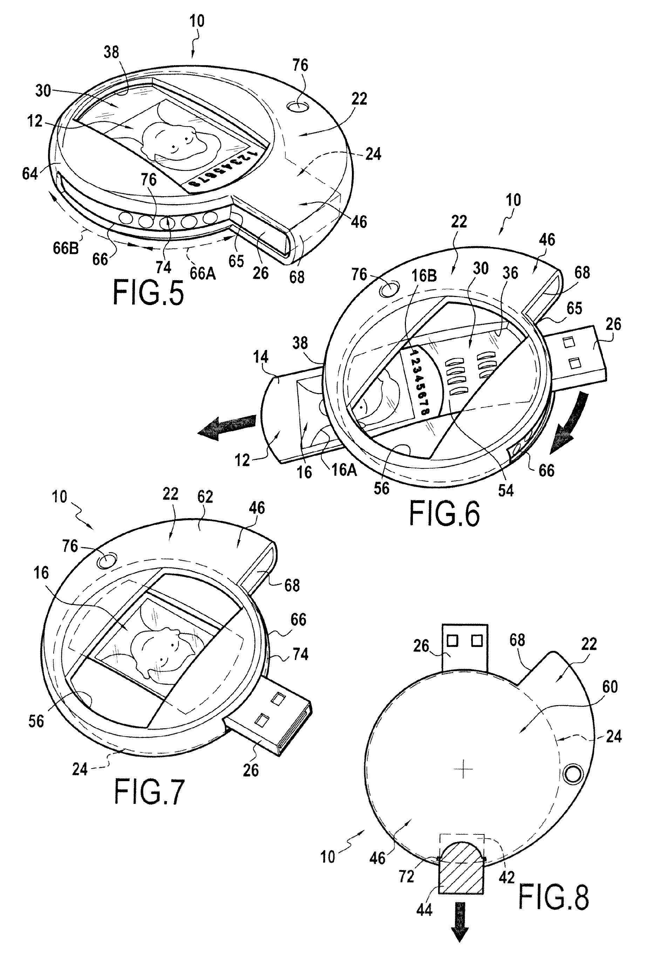

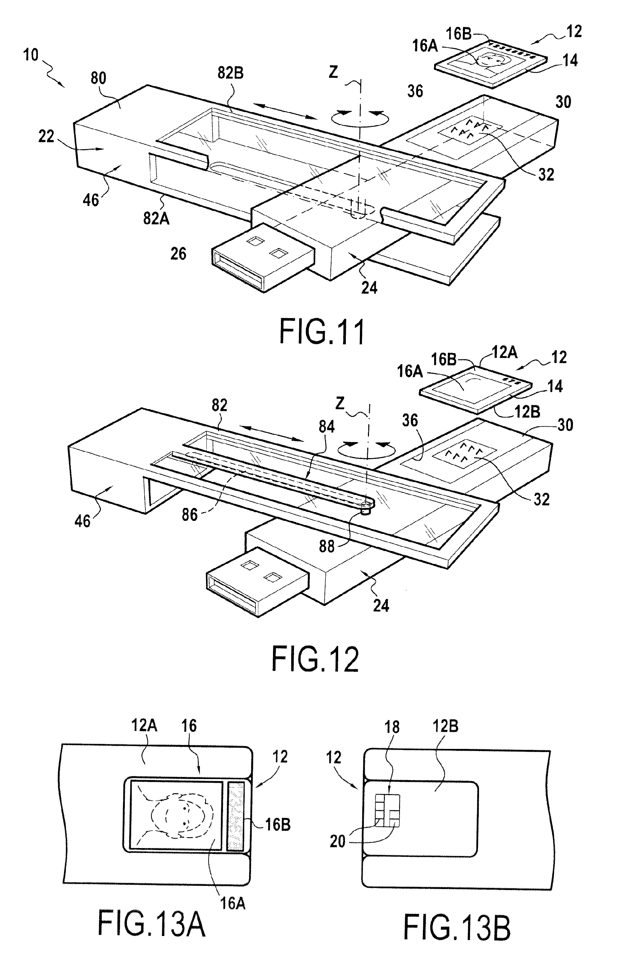

D'autres caractéristiques et avantages de l'invention apparaîtront à la lumière de la description qui suit, faite en référence aux dessins annexés dans lesquels :- les figures 1 à 3 représentent des vues en perspective d'un dispositif personnalisable de poche selon un premier mode de réalisation de l'invention comprenant un support pour carte à microcircuit et une carte à microcircuit portée par le support agencés respectivement selon des première, deuxième et troisième positions ; - la figure 4 est une vue de dessus par transparence du dispositif de la figure 1 ; - les figures 5 à 7 sont des vues en perspective d'un dispositif personnalisable selon un deuxième mode de réalisation respectivement dans des première, deuxième et troisième positions ; - la figure 8 est une vue de dessous de la figure 7 ; - la figure 9 est une vue en perspective d'un dispositif personnalisable de poche qui n'est pas confrome à l'invention dans une première position; - la figure 10 est une vue en coupe selon la ligne X-X de la figure 9; - la figure 11 est une vue en perspective du dispositif de la figure 10 dans une deuxième position ; - la figure 12 est une vue en perspective d'un dispositif personnalisable de poche selon une variante qui n'est pas conforme à l'invention ; - les figures 13A et 13B représentent respectivement deux faces opposées d'une carte au format carte à puce comportant une prédécoupé délimitant la carte à microcircuit des figures 9 à 12

On a représenté sur **la** **figure 1** un dispositif électronique personnalisable de poche selon un premier mode de réalisation de l'invention. Ce dispositif est désigné par la référence générale 10.

Le dispositif 10 comprend une carte 12 personnalisable. Par carte personnalisable 12, on entend au sens de l'invention, une carte 12 personnalisable graphiquement par exemple par une impression sur une de ses faces, ou personnalisable électroniquement, par incorporation dans la carte 12 d'un élément électronique, tel qu'un microcircuit apte à mémoriser des données personnelles ou encore les deux types de personnalisation simultanément.

Par exemple, la carte 12 comprend un corps de carte 14 délimitant les dimensions extérieures de cette carte 12. Dans l'exemple illustré, le corps de carte 14 a une forme générale sensiblement rectangulaire avec deux côtés opposés arrondis. La carte 12 a par exemple un format correspondant sensiblement à la moitié d'une carte au format ID-1 de la norme ISO 7816.

De façon classique, le corps de carte 14 est réalisé par exemple dans un matériau comprenant essentiellement une matière plastique telle que du PVC, etc.

En variante, la carte 12 peut avoir une forme générale sensiblement rectangulaire comme cela est représenté sur **les** **figures 13A et 13B****.** En outre, dans une autre variante non illustrée, les dimensions extérieures de la carte 12 peuvent être égales aux dimensions du format ID-000 défini par la norme des cartes à puce ISO 7816, c'est-à-dire 25 mm par 15 mm. D'autres formats de carte non illustrés peuvent également convenir.

La carte 12 forme par exemple, comme cela est illustré dans la variante **des** **figures 13A, 13B****,** une prédécoupe d'un corps de carte à puce au format ID-1.

De préférence, la carte 12 comprend un microcircuit (non représenté) et porte par exemple sur une de ses faces 12A un élément de personnalisation graphique 16 tel que par exemple un identifiant d'un possesseur du dispositif 10, une photographie, un dessin, un logo, des données personnelles d'état civil d'une personne, etc. Dans cet exemple, le dispositif 10 forme un titre d'abonnement à un réseau de transports urbains et l'élément de personnalisation 16 de la carte 12 comprend une photographie 16A de l'utilisateur ainsi qu'un numéro d'abonné 16B.

Par exemple, l'élément 16 est imprimé sur la face 12A, à l'aide de techniques d'impression connues par l'homme du métier travaillant dans le domaine technique de l'impression des cartes à puce.

La carte 12 comprend sur l'autre de ses faces 12B une interface 18 de contacts externes 20, dite première interface 18. Cette première interface 18 est non visible sur **les** **figures 1 à 4** mais un exemple possible de réalisation d'une telle interface 18 est représenté en détail sur **la** **figure 13B****.**

La carte 12 incorpore en outre un microcircuit (non représenté) s'étendant généralement au droit de la première interface 18 de contacts externes 20 à laquelle le microcircuit est raccordé électriquement. Par exemple, l'interface 18 de contacts externes 20 est conforme à la norme ISO 7816.

Cette norme définit classiquement la fonction, la position et le nombre des contacts électriques de surface de la carte avec un dispositif externe à la carte. En général, les cartes à microcircuit comptent huit contacts C1 à C8 dont seulement cinq sont attribués par la norme ISO 7816-2.

Ainsi, conformément à cette norme, le contact C1, désigné classiquement par « VCC », forme une borne d'alimentation du microcircuit de la carte 12. Le contact C2, désigné classiquement par « RST » est un contact de réinitialisation et le contact C3, désigné classiquement par « CLK » est destiné à être relié à une horloge du microcircuit. Le contact C5, désigné classiquement par « GND », est défini comme étant un potentiel de référence commun à la carte 12 et à un dispositif externe de lecture de la carte 12. Le contact C7, désigné classiquement par « I/O », forme par exemple de former un canal de communication de données entre la carte 12 et un dispositif externe de lecture de la carte 12. Les contacts C4, C6 et C8 ne sont traditionnellement pas attribués par cette norme et sont donc disponibles pour la réalisation de nouvelles applications.

Le dispositif 10 comprend également un support 22 pour la carte à microcircuit 12. Ce support 22 comprend un corps 24 muni d'un connecteur 26 à clé électronique.

Le connecteur 26 est par exemple conforme à la norme USB des clés mémoire et est apte à venir en prise avec un port USB complémentaire d'un terminal externe tel qu'un ordinateur personnel (non représenté).

Le corps 24 est également muni d'un logement 30 pour carte à microcircuit. Dans l'exemple décrit et comme cela est illustré sur **la** **figure 2**, le logement 30 comprend une deuxième interface 32 de contacts électriques 34 apte à coopérer par couplage avec la première interface 18 de la carte 12. Dans l'exemple illustré, la deuxième interface 32 est de type à contacts balais.

Plus précisément, le logement 30 comprend une ouverture 38 d'insertion de la carte 12 dans le logement 30.

Dans le premier mode de réalisation illustré sur **les** **figures 1 à 4**, le logement 30 est délimité par une cavité 36 ménagée dans le corps 24 dimensionnée pour recevoir la carte 12 et l'ouverture 38 est latérale.

Dans cet exemple, la carte 12 a une forme générale oblongue définissant une direction longitudinale. Dans ce mode de réalisation, l'ouverture 38 permet notamment une introduction de la carte 12 selon sa direction longitudinale.

En outre, par exemple, le connecteur 26 est destiné à être raccordé électriquement aux plages C1, C5, C4 et C8 par couplage de sa deuxième interface 32 avec la première interface 18 lorsque la carte 12 est insérée dans le logement 30. Les contacts C4 et C8 traditionnellement non attribués par la norme ISO 7816, sont ainsi utilisés pour réaliser une communication conforme au protocole USB.

Ainsi, le microcircuit comprend des moyens de communication dans un protocole USB de manière à ce que lorsque le connecteur 26 est inséré dans un port USB, le microcircuit puisse échanger des données avec l'équipement externe muni du port USB. Ainsi, un utilisateur du dispositif 10 peut avoir accès à des données mémorisées dans le microcircuit par connexion USB du connecteur 26 dans un port USB externe.

De préférence, le corps 24 incorpore encore une antenne 40 de communication à champ proche, représentée en pointillée sur **la** **figure 4****.** L'antenne 40 comprend une pluralité de spires électriquement conductrices s'étendant en périphérie du corps 24 et les extrémités 40A, 40B de l'antenne 40 sont raccordées à des contacts de la deuxième interface 32, par exemple, les contacts balais 34 aptes à être couplés avec les contacts C1 et C7 de la première interface 18.

De préférence, l'élément de personnalisation 16 est associé à au moins une donnée mémorisée dans le microcircuit et accessible via une communication à champ proche au moyen de l'antenne 40 et/ou via une communication de type USB au moyen du connecteur 26.

Eventuellement, le corps 24 comprend encore un compartiment 42 de stockage d'un organe électronique 44. Ce compartiment 42 est par exemple adapté à recevoir une carte mémoire 44, par exemple du type MMC (acronyme anglais pour « Multi Media Card ») ou RS-MMC (pour « Reduced Size Multi Media Card »).

Plus particulièrement, le support 22 comprend en outre un capuchon 46 relié au corps 24 et déplaçable par rapport à ce dernier. Ce capuchon 46 a notamment pour fonction de ranger le connecteur 26 lorsque ce dernier n'est pas utilisé.

En outre, ce capuchon 46 est déplaçable par rapport au corps 24 entre plusieurs positions remarquables.

Plus particulièrement, le capuchon 46 est déplaçable par rapport au corps 24 entre au moins des première (**figure 1**) et deuxième (**figure 2**) positions, le corps 24 et le capuchon 46 étant agencés entre eux pour permettre l'obturation de l'ouverture 38 du logement 30 dans la première position et sa libération dans la deuxième position.

Dans ce premier mode de réalisation, la première position correspond également à une position de rangement du connecteur 26 dans le capuchon 46. Dans cette première position illustrée notamment sur **la** **figure 1**, le connecteur 26 est logé à l'intérieur du capuchon 46 et est ainsi protégé de l'environnement extérieur, notamment de l'humidité, de la poussière, des chocs éventuels, etc.

Dans la deuxième position illustrée notamment par **la** **figure 2**, l'ouverture latérale 38 de la cavité 36 est dégagée (libérée) ce qui permet l'insertion de la carte 12 et donc la personnalisation du dispositif 10 et/ou le retrait de cette carte 12 hors du logement 30 pour échanger la carte 12.

Par ailleurs, le capuchon 46 est déplaçable par rapport au corps 24 dans une troisième position de dégagement du connecteur 26 hors du capuchon 46 pour son utilisation. En effet, dans cette troisième position illustrée par la figure 3, le connecteur 26 est dégagé du capuchon 46 et est apte à venir en prise avec un port de clé mémoire d'un équipement externe tel qu'un ordinateur personnel (non représenté). En outre, comme cela est visible, dans cette position, le compartiment 42 de la carte mémoire 44 est également accessible ce qui permet à l'utilisateur du dispositif 10 de la retirer ou de la ranger.

Dans cette troisième position, le corps 24 et le capuchon 46 sont agencés pour obturer l'ouverture 38 du logement 30. En outre, dans ce premier mode de réalisation, les trois positions sont distinctes.

Dans ce premier mode de réalisation, pour passer d'une position à l'autre, le capuchon 46 est configuré pour recevoir au moins partiellement le corps 24 mobile en rotation autour d'un axe prédéfini Z.

Le capuchon 46 comprend par exemple une ouverture 48 agencée pour coïncider au moins partiellement avec l'ouverture 38 du logement 30 au moins dans la deuxième position pour permettre l'insertion et le retrait de la carte 12 (figure 2).

Par exemple, le corps 24 a une forme générale de disque tronqué par un méplat 50 portant le connecteur 26 et le capuchon 46 a une forme générale de coque délimitant l'ouverture 48 du capuchon 46. Le corps 24 est apte à tourner à l'intérieur de la coque pour présenter successivement par l'ouverture 48 de la coque 46, le méplat 50 (figure 3) ou une portion du disque 52 (figure 1) ou encore les deux simultanément (figure 2) lors du déplacement relatif du corps 24 et du capuchon 46. Par exemple, le disque tronqué du corps 24 a un diamètre compris entre 50 et 70 millimètres.

Dans la position de rangement du connecteur 26 dans le capuchon 46, la portion de non tronquée dépasse de la coque 46 et forme ainsi une molette permettant à l'utilisateur de faire tourner le corps 24 à l'intérieur du capuchon 46.

Dans ce premier mode de réalisation, dans la position de rangement du connecteur 26, le dispositif 10 a ainsi une forme ronde non anguleuse ce qui permet d'éviter notamment d'abîmer une poche du pantalon ou un sac dans lequel le dispositif est susceptible d'être rangé lorsqu'il est non utilisé. Par ailleurs, le corps 24 en étant reçu que partiellement dans le capuchon 46 dans cette position forme une molette esthétique et ergonomique.

En outre, dans l'exemple décrit, le compartiment de stockage 42 de la carte mémoire 44 débouche du côté du méplat 50. Ceci permet de libérer le compartiment 42 en même temps que le connecteur 26 est dégagé pour son utilisation.

De préférence, pour indiquer le passage d'une position à l'autre à l'utilisateur, le dispositif 10 comprend des moyens à cliquet complémentaires (non représentés) positionnés sur le corps 24 et à l'intérieur de la cavité permettant le déplacement par incrément du capuchon 46 par rapport au corps 24. L'utilisateur ressent alors lors du passage d'une position à l'autre, une légère résistance au mouvement liée à la présence des cliquets qui lui indiquent l'emplacement des positions. Ceci permet d'éviter également que le dispositif 10 change de positions intempestivement sans l'intervention manuelle de l'utilisateur.

Le logement 30 peut être muni d'une ouverture latérale permettant l'insertion de la carte selon une direction perpendiculaire à la direction longitudinale de la carte.

En outre, de préférence, au moins dans la première position, l'agencement relatif du capuchon 46 et du corps 24 permet de laisser apparent l'élément de personnalisation 16 porté par la face 12A de la carte 12.

A cet effet, dans l'exemple décrit, le logement 30 comprend une fenêtre 54, dite première fenêtre 54, à travers laquelle l'élément de personnalisation est visible de l'extérieur du corps 14. Cette fenêtre 54 est par exemple formée par une ouverture frontale de la cavité 36 délimitant le logement 30, distincte de l'ouverture d'introduction 38 comme illustré sur la figure 1. Ainsi, la fenêtre 54 est positionnée de manière à s'étendre sensiblement au droit de l'élément de personnalisation graphique 16, c'est-à-dire la face 12A de la carte 12.

En outre, le capuchon 46 est muni également d'une fenêtre 56, dite deuxième fenêtre 56, apte à coïncider avec la première fenêtre 54 au moins dans la première position du dispositif 10. Cette deuxième fenêtre 56 est réalisée dans cet exemple dans un matériau transparent aux rayons visibles.

Dans une variante non illustrée, la première fenêtre 54 peut être formée par une vitre transparente aux rayons visibles agencée pour s'étendre sensiblement au droit de l'élément de personnalisation 16.

On a représenté sur les figures 5 à 8, un deuxième mode de réalisation de l'invention. Dans ce deuxième mode de réalisation, les éléments analogues au premier mode de réalisation portent des références identiques.

Dans ce deuxième mode de réalisation, le capuchon 46 reçoit entièrement le corps 24 dans la position de rangement du connecteur 26 (figure 5).

Par exemple, le corps 24 a une forme générale de disque 60 prolongé radialement par le connecteur 26 et le capuchon 46 a dans l'exemple décrit une forme générale de volute 62 comprenant une paroi périphérique 64 agencée pour épouser circonférentiellement le corps 24. Cette forme de volute 62 comprend un axe d'enroulement Z correspondant à l'axe de rotation prédéfini du support 22 et le disque 60 est centré sur l'axe d'enroulement de la volute 62. En outre, la paroi périphérique 64 a un contour de rayon croissant par rapport à l'axe de rotation prédéfini à partir d'un nez 65 de volute jusqu'à une sortie 68 de volute pour prendre en compte l'excentricité du corps 24 liée à la présence du connecteur 26 qui dépasse radialement du disque 60.

De même que dans le premier mode de réalisation, le capuchon 46 est déplaçable entre une première position d'obturation de l'ouverture 38 et une deuxième position de libération de cette ouverture 38. La première position correspond également à la position de rangement du connecteur 26 dans le capuchon 46 (figure 5).

Par exemple, comme cela est illustré sur la figure 5, lorsque le support est dans la position de rangement du connecteur 26, ce dernier est logé à l'intérieur du volume défini par la sortie de volute 68.

En outre, pour passer d'une position à l'autre, de préférence, la paroi périphérique 64 du capuchon 46 est munie d'une fente périphérique 66 par laquelle le connecteur 26 est susceptible de faire saillie lors du déplacement relatif du corps 24 et du capuchon 46. Ainsi, par exemple, la fente périphérique 66 s'étend sur un quart de la paroi périphérique 64 en partant de la sortie 68 de volute.

Dans ce deuxième mode de réalisation, le capuchon 46 comprend une première ouverture 70 ménagée sur la paroi périphérique 64 et s'étendant sensiblement diamétralement opposée à une première moitié 66A de la fente 66. Cette première moitié 66A s'étend dans cet exemple du nez de volute 65 jusqu'à la moitié de la fente 66.

Comme cela est illustré sur la figure 6, pour libérer l'ouverture 38 du logement 30 de la carte 12, il faut tourner le corps 24 d'un angle sensiblement égal à 45° correspondant à une position du corps 24 dans laquelle le connecteur 26 est sensiblement la moitié de la fente 66 pour permettre une mise en coïncidence des deux ouvertures 38 et 70 respectivement ménagées sur le corps 24 et sur le capuchon 46. Cette position correspond ainsi à la deuxième position de libération de l'ouverture 38 du logement 30.

En outre, le capuchon 46 est déplaçable dans une troisième position d'utilisation du connecteur 26. Dans cette troisième position, l'ouverture 38 est également obturée.

Ainsi, lors de la rotation du corps 24 autour de l'axe Z, le connecteur 26 est apte à être déplacé sensiblement d'un angle droit (figure 7 et 8) entre une première position de rangement du connecteur 26 à l'intérieur de la sortie de volute 68 (figure 5) et une troisième position, obtenue par rotation de 90° à partir de la première position de rangement, d'utilisation du connecteur 26 (figure 7), en passant par la position intermédiaire de libération de l'ouverture 38 du logement 30.

En outre, dans ce deuxième mode de réalisation, comme cela est illustré sur la figure 8, sur la paroi périphérique 64 du capuchon 46 est ménagée une deuxième ouverture 72 apte à coïncider avec le compartiment de stockage 42 dans la position d'utilisation du connecteur 26. Ainsi, le compartiment de stockage 42 est par exemple positionné sensiblement à l'opposé du connecteur 26 et la deuxième ouverture 72 est ménagée sensiblement diamétralement opposée à une deuxième moitié 66B de la fente périphérique 66.

Afin de faciliter le déplacement d'une position à l'autre du corps 24 qui est entièrement logé à l'intérieur du capuchon 46 dans sa position de rangement, le corps 24 présente, par exemple en périphérie d'une portion du disque 60 apte à coïncider avec la fente périphérique 66 dans la position de rangement, des moyens tactiles 74 de préhension du disque 60 pour faciliter sa mise en rotation. Ces moyens tactiles 74 comprennent par exemple des aspérités 76 réalisées en surface offrant à l'utilisateur une prise efficace pour actionner la rotation du corps 24 à l'intérieur de la volute 62.

En outre, le capuchon 46 comprend par exemple un élément d'attache pour porte-clés comprenant un trou 76 pour faciliter son transport.

Dans ce deuxième mode de réalisation, le corps 24 est entièrement logé à l'intérieur du capuchon 46 dans la position de rangement du connecteur ce qui permet d'éviter qu'un geste involontaire de l'utilisateur n'entraîne un changement de position du dispositif 10. En outre, la forme du dispositif est sensiblement arrondie ce qui est particulièrement esthétique tout en étant très ergonomique. Par ailleurs, la forme du capuchon épouse sensiblement la forme du corps ce qui permet un gain de place.

On a représenté sur les figures 9 à 13 un autre support pour carte qui n'est pas conforme à l'invention. Dans les figures 9 à 13, les éléments analogues aux premier et deuxième modes de réalisation portent des références identiques.

Le capuchon 46 comprend un embout 80 de protection du connecteur 26. Le corps 24 portant le connecteur 26 a une forme générale rectangulaire parallélépipédique. Le corps 24 comprend un logement 30 délimité par une cavité ouverte 38 sur la face supérieure du corps 24. La carte 12 illustrée en détail sur les figures 13A et 13B est par exemple insérée directement selon une direction orthogonale au plan de la carte dans le logement 30 (figure 11).

En outre, de préférence, l'embout 80 est prolongé par au moins une languette 82 et comme cela est illustré sur les figures 9 à 11 par deux languettes inférieure 82A et supérieure 82B s'étendant en vis-à-vis l'une de l'autre.

Comme cela est illustré sur la figure 11, au moins une languette 82A est reliée au corps 24. Dans cet exemple, la languette inférieure 82A est reliée de façon mobile au corps 24.

Le corps 24 est déplaçable par rapport au capuchon 46 et, plus précisément par rapport à la languette 82A à laquelle le corps 24 est de préférence relié.

Ainsi, pour passer de la première à la deuxième position, le corps 24 est déplaçable en translation selon une direction longitudinale de la languette 82A pour dégager le connecteur 26 de l'embout 80 puis en rotation autour d'un axe prédéfini Z sensiblement orthogonal au plan de déplacement, pour autoriser le dégagement du connecteur 26 hors du capuchon 46, dans l'espace d'entretoisement des deux languettes 82A, 82B.

A cet effet, le dispositif 10 comprend des moyens 84 de guidage du déplacement du corps 24 par rapport au capuchon 46. Par exemple, les moyens de guidage 84 comprennent une rainure 86 ménagée sur la languette inférieure 82A et un pion 88 apte à coopérer dans la rainure 86.

Plus précisément, le capuchon 46 et le corps 24 sont agencés entre eux pour bloquer la sortie de la carte 12 hors de son logement 30 dans la première position illustrée les figures 9 et 10 correspondant également à la position de rangement du connecteur 26. Ainsi, la languette supérieure 82B vient obturer l'ouverture frontale 38 du logement 30 de la carte 12 lorsque le corps 24 est dans la position de rangement du connecteur 26. Cette languette 82B comprend par exemple une vitre transparente aux rayons visibles permettant de voir la carte 12 tout en bloquant sa sortie hors du logement 30.

En revanche, dans la position d'utilisation du connecteur 26 qui est également la position d'insertion de la carte 12 dans le dispositif 10, l'ouverture du logement 30 n'est plus obturée par la languette supérieure 82A.

Eventuellement, à titre de variante supplémentaire, pour éviter une sortie intempestive de la carte 12 hors du logement 30 dans cette position d'utilisation, le logement 30 peut comprendre un bras de retenue formant une sangle rigide s'étendant en travers du logement 30 permettant l'insertion de la carte 12 dans une position inclinée par rapport au logement 30 mais bloquant la sortie de la carte 12 selon une direction sensiblement parallèle à l'axe Z.

Dans une variante illustrée sur la figure 12, le capuchon 46 peut comprendre une seule languette 82. Dans ce cas, la rainure 86 est ménagée au centre de la vitre.

On va maintenant décrire les principaux aspects de fonctionnement d'un dispositif électronique personnalisable de poche selon le premier mode de réalisation. Le fonctionnement du dispositif selon le deuxième mode de réalisation est sensiblement identique.

Initialement, le dispositif 10 est dans la première position. Dans cette première position, le connecteur 26 est protégé par le capuchon 46 et l'ouverture 38 du logement 30 est obturée. En outre, de préférence, les deux fenêtres 54 et 56 respectivement du corps 24 et du capuchon 46 coïncident verticalement et permettent de laisser visible la face 12A de carte 12 portant l'élément de personnalisation 16. Par ailleurs, une portion 52 du disque dépasse de la coque 46 pour faciliter sa mise en rotation.

Par exemple, dans le cas d'une application dans le domaine de l'identification des usages d'un réseau de transport en commun, le contrôle du titre du passager est relativement aisé lorsque le dispositif est dans cette première position.

L'utilisateur souhaite par exemple utiliser le connecteur USB 26 pour gérer son abonnement au transport en commun au moyen d'un terminal externe tel que son ordinateur personnel. Dans ce cas, l'utilisateur engage une rotation de 1800 du corps 24 par rapport au capuchon 46 pour passer de la première à la troisième position dans laquelle le connecteur 26 est dégagé du capuchon 46.

Dans ces deux positions et dans ce premier mode de réalisation, la sortie de la carte hors de son logement est bloquée afin de limiter au mieux les risques de perte de cette dernière.

Pour personnaliser le dispositif 10 ou échanger la carte 12, l'insertion et le retrait de la carte 12 est relativement aisé. En effet, il suffit d'effectuer une rotation d'un angle sensiblement égal à 90° autour de l'axe Z du corps 24 par rapport au capuchon 46 de la première position initiale à la deuxième position du dispositif 10 illustrée sur la figure 2. Ceci permet la libération de l'ouverture du logement et l'insertion de la carte 12 ou son retrait.

L'invention présente de nombreux avantages. Ainsi, dans la position d'obturation, le dispositif est facile à transporter et ne présente pas le risque de perdre la carte lors de son transport. En outre, le capuchon forme un moyen de verrouillage discret et esthétique du logement de la carte tout en étant très pratique et simple d'utilisation.

Il est bien entendu que les modes de réalisation qui viennent d'être décrits ne présentent aucun caractère limitatif et qu'ils pourront recevoir toute modification désirable sans sortir pour cela du cadre de l'invention.

## Revendications

1. Support (22) pour une carte personnalisable (12), telle qu'une carte à microcircuit, le support comprenant un corps (24) muni d'un connecteur à clé électronique (26) et d'un logement (30) pour la carte (12) muni d'une ouverture (38) d'insertion de la carte (12) dans le logement, le support comprenant en outre un capuchon (46) de rangement du connecteur (26) relié au corps (24) et déplaçable par rapport au corps (24) entre au moins une première position correspondant à une position de rangement du connecteur (26) dans le capuchon et une deuxième position, le corps (24) et le capuchon (46) étant agencés entre eux pour permettre l'obturation de l'ouverture (38) dans la première position et sa libération dans la deuxième position et le corps étant déplaçable par rapport au capuchon dans une troisième position de dégagement du connecteur hors du capuchon pour son utilisation, le corps et le capuchon (46) étant agencés pour obturer l'ouverture (38) du logement (30) dans la troisième position.

2. Support (22) selon l'une quelconque des revendications précédentes, dans lequel le corps (24) et le capuchon (46) sont agencés pour laisser apparent au moins dans la première position un élément de personnalisation graphique porté par une des faces (12A) de la carte (12).

3. Support (22) selon l'une quelconque des revendications précédentes, dans lequel le logement (30) comprend une première interface (32) de couplage avec une deuxième interface (18) de la carte (12) raccordée à un microcircuit de la carte (12), la première interface (32) étant raccordée électriquement au connecteur (26).

4. Support (22) selon l'une quelconque des revendications précédentes, dans lequel, pour passer d'une position à l'autre, le capuchon (46) est configuré pour recevoir au moins partiellement le corps (24) mobile en rotation autour d'un axe prédéfini (Z) et le capuchon (46) comprend une ouverture (48) agencée pour coïncider avec l'ouverture (38) du logement (30) dans la deuxième position.

5. Support (22) selon la revendication précédente, dans lequel le capuchon (46) a une forme de coque délimitant l'ouverture (48) du capuchon (46) et le corps (24) a une forme générale de disque tronqué par un méplat (50) portant le connecteur (26), le corps (24) étant susceptible de présenter successivement par l'ouverture (48) de la coque (46), le méplat (50) et/ou une portion (52) non tronquée de son disque lors du déplacement relatif du corps (24) et du capuchon (46).

6. Support selon la revendication 4, dans lequel le corps (24) a une forme générale de disque (60) prolongé radialement par le connecteur (26) et le capuchon (46) a une forme générale de volute (62) comprenant une paroi périphérique (64) agencée pour épouser circonférentiellement le corps (24) et munie d'au moins une fente périphérique (66) par laquelle le connecteur (26) est susceptible de faire saillie lors du déplacement relatif du corps (24) et du capuchon (46).

7. Support (22) selon la revendication précédente, dans lequel la volute (62) a un axe d'enroulement correspondant à l'axe prédéfini (Z) et le disque du corps (24) est centré sur cet axe d'enroulement.

8. Support (22) selon l'une quelconque des revendications 4 à 7, dans lequel l'ouverture (38) est latérale.

9. Dispositif électronique personnalisable de poche (10) comprenant un support de carte (22) et une carte personnalisable (12), **caractérisé en ce que** le support (22) est selon l'une quelconque des revendications précédentes.

10. Dispositif selon la revendication précédente, dans lequel la carte (12) incorpore un microcircuit et/ou porte un élément de personnalisation graphique (16, 16A, 16B) au moins sur l'une de ses faces (12A).

## Patentansprüche

1. Träger (22) für eine personalisierbare Karte (12), wie eine Karte mit Mikroschaltung, wobei der Träger einen Körper (24), der mit einem Steckverbinder mit elektronischem Schlüssel (26) und einer Lagerung (30) für die Karte (12) versehen ist, die mit einer Öffnung (38) zum Einsetzen der Karte (12) in die Lagerung versehen ist, umfasst, wobei der Träger ferner eine Kappe (46) zum Verstauen des Steckverbinders (26) umfasst, die mit dem Körper (24) verbunden und in Bezug zum Körper (24) zwischen mindestens einer ersten Position, die einer Verstauposition des Steckverbinders (26) in der Kappe entspricht, und einer zweiten Position verschiebbar ist, wobei der Körper (24) und die Kappe (46) zwischen diesen derart angeordnet sind, dass sie den Verschluss der Öffnung (38) in der ersten Position und ihre Freigabe in der zweiten Position ermöglichen, wobei der Körper in Bezug zur Kappe in eine dritte Position zur Freigabe des Steckverbinders aus der Kappe zu dessen Verwendung verschiebbar ist, wobei der Körper und die Kappe (46) derart angeordnet sind, dass sie die Öffnung (38) der Lagerung (30) in der dritten Position verschließen.

2. Träger (22) nach einem der vorhergehenden Ansprüche, bei dem der Körper (24) und die Kappe (46) derart angeordnet sind, dass sie zumindest in der ersten Position ein grafisches Personalisierungselement, das von einer der Seiten (12A) der Karte (12) getragen wird, sichtbar lassen.

3. Träger (22) nach einem der vorhergehenden Ansprüche, bei dem die Lagerung (30) eine erste Schnittstelle (32) zur Kopplung mit einer zweiten Schnittstelle (18) der Karte (12) umfasst, die an eine Mikroschaltung der Karte (12) angeschlossen ist, wobei die erste Schnittstelle (32) elektrisch an den Steckverbinder (26) angeschlossen ist.

4. Träger (22) nach einem der vorhergehenden Ansprüche, bei dem für den Übergang von einer Position in die andere die Kappe (46) derart ausgeführt ist, dass sie zumindest teilweise den Körper (24), der in Drehung um eine vordefinierte Achse (Z) beweglich ist, aufnimmt, und die Kappe (46) eine Öffnung (48) umfasst, die derart angeordnet ist, dass sie mit der Öffnung (38) der Lagerung (30) in der zweiten Position zusammenfällt.

5. Träger (22) nach dem vorhergehenden Anspruch, bei dem die Kappe (46) eine Schalenform hat, die eine Öffnung (48) der Kappe (46) begrenzt, und der Körper (24) eine allgemeine Scheibenform, die durch eine Abflachung (50), die den Steckverbinder (26) trägt, abgeschnitten ist, hat, wobei der Körper (24) geeignet ist, nacheinander durch die Öffnung (48) der Schale (46) die Abflachung (50) und/oder einen nicht abgeschnittenen Abschnitt (52) seiner Scheibe bei der relativen Verschiebung des Körpers (24) und der Kappe (46) zu zeigen.

6. Träger nach Anspruch 4, bei dem der Körper (24) eine allgemeine Scheibenform (60) hat, die radial durch den Steckverbinder (26) verlängert ist, und die Kappe (46) eine allgemeine Form eines Spiralgehäuses (62) hat, umfassend eine Umfangswand (64), die derart angeordnet ist, dass sie sich in Umfangsrichtung an den Körper (24) anlegt, und mit mindestens einem Umfangsschlitz (66) versehen ist, durch den der Steckverbinder (26) bei der relativen Verschiebung des Körpers (24) und der Kappe (46) hervorzuragen.

7. Träger (22) nach dem vorhergehenden Anspruch, bei dem das Spiralgehäuse (62) eine Wickelachse hat, die der vordefinierten Achse (Z) entspricht, und die Scheibe des Körpers (24) auf diese Wickelachse zentriert ist.

8. Träger (22) nach einem der Ansprüche 4 bis 7, bei dem die Öffnung (38) seitlich ist.

9. Personalisierbare elektronische Taschenvorrichtung (10), umfassend einen Kartenträger (22) und eine personalisierbare Karte (12), **dadurch gekennzeichnet, dass** der Träger (22) einem der vorhergehenden Ansprüche entspricht.

10. Vorrichtung nach dem vorhergehenden Anspruch, bei der die Karte (12) eine Mikroschaltung einschließt und/oder ein grafisches Personalisierungselement (16, 16A, 16B) zumindest auf einer ihrer Seiten (12A) trägt.

## Claims

1. A support (22) for a personalizable card (12), such as a microcircuit card, the support comprising a body (24) having an electronic key connector (26) and a housing (30) for the card (12), the housing having an opening (38) for inserting the card (12) into the housing, the support further comprising a storage cap (46) for storing the connector (26) connected to the body (24) and movable relative to the body (24) between at least a first position corresponding to a position for storing the connector (26) inside the cap and a second position, the body (24) and the cap (46) being arranged together to enable the opening (38) to be closed in the first position and to be open in the second position, and the body being movable relative to the cap in a third position for disengaging the connector from the cap in order to be used, the body and the cap (46) being arranged to close the opening (38) of the housing (30) in the third position.

2. A support (22) according any preceding claim, wherein the body (24) and the cap (46) are arranged to leave visible at least in the first position, a graphics personalization element carried by one of the faces (12A) of the card (12).

3. A support (22) according to either preceding claim, wherein the housing (30) includes a first interface (32) for coupling with a second interface (18) of the card (12) that is connected to a microcircuit of the card (12), the first interface (32) being electrically connected to the connector (26).

4. A support (22) according to any preceding claim, wherein, in order to pass from one position to another, the cap (46) is configured to receive at least part of the body (24) that is movable in rotation about a predefined axis (Z), and the cap (46) includes an opening (48) arranged to coincide with the opening (38) of the housing (30) in the second position.

5. A support (22) according to the preceding claim, wherein the cap (46) is in the shape of a shell defining the opening (48) of the cap (46) and the body (24) is generally in the shape of a disk truncated by a flat (50) carrying the connector (26), the body (24) being suitable for presenting in succession via the opening (48) of the shell (46), the flat (50) and/or a non-truncated portion (52) of its disk during relative movement of the body (24) and of the cap (46).

6. A support (22) according to claim 4, wherein the body (24) is generally in the form of a disk (60) extended radially by the connector (26), and the cap (46) is generally in the form of a volute (62) having a peripheral wall (64) arranged to fit circumferentially closely to the body (24) and provided with at least one peripheral slot (66) through which the connector (26) can project during relative movement of the body (24) and the cap (46).

7. A support (22) according to the preceding claim, wherein the volute (62) has a winding axis corresponding to the predefined axis (Z) and the disk of the body (24) is centered on the winding axis.

8. A support (22) according to any one of claims 4 to 7, wherein the opening (38) is a side opening.

9. An electronic personalizable pocket device (10) comprising a card support (22) and a personalizable card (12), the device being **characterized in that** the support (22) is according to any preceding claim.

10. A device according to the preceding claim, wherein the card (12) incorporates a microcircuit and/or carries a graphics personalization element (16, 16A, 16B) on at least one of its faces (12A).
